# EUROPÄISCHE PATENTSCHRIFT

(11) **EP 2 793 657 B1**
(45) Veröffentlichungstag und Bekanntmachung des Hinweises auf die Patenterteilung: **09.03.2016**
(21) Anmeldenummer: 12812174.6
(22) Anmeldetag: 20.12.2012
(51) Int. Cl.: A47B 88/04

(54) **VORRICHTUNG ZUR BEWEGUNGSBEEINFLUSSUNG EINES MÖBELTEILS, FÜHRUNGSEINHEIT ZUR BEWEGUNGSFÜHRUNG EINES MÖBELTEILS UND MÖBEL**
DEVICE FOR INFLUENCING THE MOVEMENT OF A FURNITURE PART, GUIDE UNIT FOR GUIDING THE MOVEMENT OF A FURNITURE PART, AND ITEM OF FURNITURE
DISPOSITIF POUR INFLUENCER LE MOUVEMENT D'UNE PARTIE DE MEUBLE, SYSTÈME DE GUIDAGE POUR GUIDER LE MOUVEMENT D'UNE PARTIE DE MEUBLE ET MEUBLE

(30) Priorität: 23.12.2011 DE 102011122266
(43) Veröffentlichungstag der Anmeldung: 29.10.2014
(73) Patentinhaber: Grass GmbH, 6973 Höchst (AT)
(72) Erfinder: EGGER, Remo, A-6941 Langenegg (AT)
(74) Vertreter: Otten, Roth, Dobler & Partner mbB Patentanwälte
(86) Internationale Anmeldenummer: PCT/EP2012/005285
(87) Internationale Veröffentlichungsnummer: WO 2013/091864

(56) Entgegenhaltungen:
- EP-A1- 2 279 680
- WO-A1-2007/068019
- DE-U1-202009 005 119

## Beschreibung

### Stand der Technik

Im Möbelbereich sind unterschiedliche Anordnungen zur Bewegungsbeeinflussung bzw. zur Bewegungsführung eines bewegbar an einem Möbelkorpus aufgenommenen Möbelteils bekannt.

Eine gattungsgemäße Anordnung ist aus der EP2 279 680 A1 bekannt.

Im Hinblick auf einen gewünschten Bedienkomfort und bereitgestellte Hilfsfunktionen für einen Nutzer sind insbesondere Funktionen von Interesse, welche ein Einwirken des Nutzers auf das Möbelteil erleichtern oder auf ein Minimum reduzieren lassen, insbesondere im Zusammenhang mit dem Öffnen, Schließen bzw. Anhalten des sich in eine Öffnungs- oder eine Schließrichtung bewegenden Möbelteils. Weitere Aspekte zielen beispielsweise darauf ab, eine weitgehend geräuscharme und materialschonende Bewegung des Möbelteils zu ermöglichen, um eine hohe Lebensdauer der Komponenten zu erreichen.

Von zentraler Bedeutung sind in diesem Zusammenhang sogenannte Einzug- bzw. Schließvorrichtungen und Ausstoß- bzw. Öffnungsvorrichtungen, die bevorzugt selbsttätig bzw. automatisiert in vorgebbaren Betriebsphasen wirken.

Einzugvorrichtungen dienen zum Beispiel insbesondere zum automatisierten vollständigen Hineinbewegen bzw. Schließen des Möbelteils auf einem letzten Bewegungswegabschnitt relativ zu einem Möbelkorpus, an dem das Möbelteil geführt bewegbar aufgenommen ist.

Für eine der Schließrichtung entgegengesetzte Öffnungsrichtung kommen Öffnungsvorrichtungen zum Einsatz, insbesondere um im geschlossenen Zustand des Möbelteils relativ zum Möbelkorpus nach einer Auslöseaktion, beispielsweise durch ein Einwirken einer Person von außen auf das bewegbare Möbelteil, das Möbelteil etwas in Öffnungsrichtung herauszubewegen, wobei dieser erste Teilweg des Herausbewegens ohne weiteres Zutun durch eine Person sondern unter der Wirkung eines Ausstoßkraftspeichers erfolgt.

Bei den genannten Anordnungen, die insbesondere nicht mit motorischen Antrieben arbeiten, kommt in aller Regel ein Kraftspeicher zum Einsatz, der wiederholend unter Kraftabgabe entladbar und mit einer aufzubringenden Krafteinwirkung wieder aufladbar ist.

### Aufgabe und Vorteile der Erfindung

Aufgabe der vorliegenden Erfindung ist es, im Möbelbereich eine bedienerfreundliche Nutzung von Möbeln bzw. Möbelteilen zu ermöglichen, insbesondere was die Bedienmodalitäten für einen Nutzer im Zusammenhang mit Aufladeszenarien von entsprechenden Kraftspeichern angeht.

Diese Aufgabe wird durch die unabhängigen Ansprüche gelöst.

Die abhängigen Ansprüche betreffen vorteilhafte Weiterbildungen der Erfindung.

Die Erfindung geht zunächst aus von einer Vorrichtung zur Bewegungsbeeinflussung eines Möbelteils, das an einem Möbelkorpus eines Möbels über eine Führungseinheit bewegbar aufgenommen ist, wobei die Vorrichtung ein der Führungseinheit zugeordnetes Grundbauteil umfasst, an dem eine Ausstoßvorrichtung und eine Einzugvorrichtung derart vorhanden ist, dass im montierten Zustand der Vorrichtung am Möbel das Möbelteil aus einer Schließstellung am Möbelkorpus unter der Wirkung eines Ausstoßkraftspeichers der Ausstoßvorrichtung in eine erste Bewegungsrichtung ausstoßbar ist und dass das Möbelteil unter der Wirkung eines Einzugkraftspeichers der Einzugvorrichtung aus einer am Möbelkorpus geöffneten Stellung in eine der ersten Bewegungsrichtung entgegengesetzte zweite Bewegungsrichtung einziehbar ist, und ein Lademechanismus zum Aufladen der Kraftspeicher vorhanden ist.

Das Grundbauteil kann fest oder lösbar mit der Führungseinheit verbunden sein. Insbesondere kann das Grundbauteil einem positionsfest am Möbelkorpus angebrachten Teil der Führungseinheit wie z. B. einer Korpusschiene einer Schienenführung zugeordnet sein, also mit diesem verbunden sein. Nicht ausgeschlossen ist es dabei, dass das Grundbauteil zum Beispiel im Nahbereich der Korpusschiene vorgesehen ist, beispielsweise am Möbelkorpus aufgenommen ist.

Unter einem Einzug- bzw. Ausstoßkraftspeicher wird insbesondere ein mechanischer Kraftspeicher verstanden, zum Beispiel eine Federanordnung bzw. eine Spiralfeder oder eine andere Feder. Der Kraftspeicherzustand kann insbesondere von der Form bzw. einem von der Form bestimmtem Spannungszustand des Kraftspeichers abhängen.

Ein Kraftspeicher ist im Sinne der Erfindung insbesondere kein elektromotorisches System bzw. kein Elektromotor oder ein Teil davon.

Als Möbelteil kommt insbesondere ein verschwenkbar und/oder verschiebbar an einem Möbelkorpus gelagertes Teil eines Möbels in Frage, insbesondere eine Schublade, ein Schubelement, eine Türe, eine Klappe oder dergleichen.

Ein erster wesentlicher Aspekt der Erfindung liegt darin, dass die Ausstoßvorrichtung ein vom Grundbauteil verschiedenes Gehäusebauteil aufweist, an welchem der Ausstoßkraftspeicher aufgenommen ist, wobei die Ausstoßvorrichtung derart versetzbar am Grundbauteil gelagert ist, dass das Aufladen des Ausstoßkraftspeichers mit einer Bewegung des Gehäusebauteils relativ zum Grundbauteil erfolgt.

Damit kann erfindungsgemäß die Vorrichtung zur Bewegungsbeeinflussung einerseits kompakt ausgebildet und andererseits mit einer einfachen und zuverlässigen Mechanik realisiert werden, insbesondere was den Teil der Ausstoßvorrichtung angeht. Besonders vorteilhaft ist, dass sich damit vergleichsweise geringe Rückstellkräfte zum Rückstellen zumindest des Ausstoßkraftspeichers realisieren lassen, um diesen aus einem entladenen oder teilentladenen Zustand in einen aufgeladenen Zustand zu bringen. Die treibende Kraft zum Aufladen ist durch den Nutzer aufzubringen, was in der Regel mit einer Bewegung des Möbelteils durch den Nutzer erfolgt.

Außerdem lassen sich mit der Möglichkeit der Versetzbarkeit bzw. der Relativbewegung des Gehäusebauteils der Ausstoßvorrichtung gegenüber dem Grundbauteil unterschiedliche Auflademechanismen realisieren. Insbesondere können vorteilhafte Auflademechanismen eingerichtet werden, da das Ausstoß-Gehäusebauteil wahlweise zum Grundbauteil bewegbar ist oder, in Zuständen, in denen die Versetzbarkeit blockiert ist, ortsfest relativ zum Grundbauteil bleibt.

Vorteilhafterweise ist es so, dass eine erste Lagerstelle des Ausstoßkraftspeichers fest am Gehäusebauteil der Ausstoßvorrichtung und eine zweite Lagerstelle des Kraftspeichers relativ zum Gehäusebauteil der Ausstoßvorrichtung beweglich ggf. daran geführt ist. Die zweite Lagerstelle ist also variabel zum Gehäusebauteil der Ausstoßvorrichtung und über die Versetzbarkeit des Gehäusebauteils zusätzlich zum Grundbauteil. Dies ist im Zusammenwirken mit bevorzugten Kraftspeichern, deren Kraftspeicherzustand von der Länge des Kraftspeichers abhängt, wie dies bei z. B. Spiralfedern der Fall ist, von besonderer Bedeutung.

Insgesamt ermöglicht die erfindungsgemäße Anordnung eine hohe Variabilität der Kinematik der betreffenden Bauteile, was konstruktiv mit einfachen Mitteln einrichtbar ist und für einen Nutzer eine kraftsparende Aufladung des entladenen Kraftspeichers ermöglicht. Dies wird insbesondere in der Figurenbeschreibung näher erläutert.

Im aufgeladenen und so gesicherten Zustand des Ausstoßkraftspeichers steht dieser für eine Ausstoßwirkung auf das Möbelteil sofort und unmittelbar zur Verfügung, sobald der gesicherte Zustand aufgehoben wird.

Dabei ist es außerdem von Vorteil, dass im geladenen Zustand des Ausstoßkraftspeichers dieser gemeinsam mit dem Gehäusebauteil der Ausstoßvorrichtung relativ zum Grundbauteil mitbewegbar ist. Dies ermöglicht eine weitere flexible Steuerung dahingehend, dass das Aufladen des Ausstoßkraftspeichers auch die Möglichkeit umfasst, das Gehäusebauteil der Ausstoßvorrichtung zu versetzen. Bei einem nicht versetzbaren Gehäusebauteil der Ausstoßvorrichtung bleibt für die Längung z. B. einer Spiralfeder allein die Verstellung der variablen Lagerstelle der Spiralfeder, was bisher nur eingeschränkte Lademechanismen zulässt. Demgegenüber ist die Erfindung deutlich verbessert.

Die Versetzbarkeit des Gehäusebauteils der Ausstoßvorrichtung gegenüber dem Grundbauteil ermöglicht es vorteilhaft auch, wenn die variable Lagerstelle des Ausstoßkraftspeichers an einer Stelle fixierbar ist, die außerhalb der Gehäusebauteils der Ausstoßvorrichtung liegt, also z. B. eine positionsfeste Stelle am Grundbauteil oder eine Stelle an einem anderen Teil der Vorrichtung zur Bewegungsbeeinflussung, dass eine entsprechende Bewegung des Gehäusebauteils der Ausstoßvorrichtung und damit die feste Lagerstelle des Ausstoßkraftspeichers ein Aufladen des Ausstoßkraftspeichers bewirkt, zum Beispiel durch ein Verlängern einer Spiralfeder. Denn die beiden Lagerstellen des Ausstoßkraftspeichers entfernen sich auf diese Weise voneinander.

Es existieren erfindungsgemäß verschiedene Möglichkeiten den Kraftspeicher zu Laden, wobei die variable Lagerstelle sich bewegt oder ortsfest ist, ebenso die feste Lagerstelle, die fest mit dem Gehäusebauteil der Ausstoßvorrichtung gekoppelt ist. Zudem kann erfindungsgemäß die Versetzbarkeit des Gehäusebauteils der Ausstoßvorrichtung und auch die variable Lagerstelle des Kraftspeichers im Zusammenwirken mit anderen versetzbaren bzw. bewegbaren Bauteilen im Nahbereich der Ausstoßvorrichtung erfolgen, zum Beispiel zusammen mit der Führungseinheit oder mit Teilen an dem Grundbauteil, wie beispielsweise Bauteilen der Einzugvorrichtung. Dies ermöglicht vorteilhafterweise eine Vielzahl von unterschiedlichen Lademechanismen.

Unter der Bewegung des Gehäusebauteils der Ausstoßvorrichtung relativ zum Grundbauteil ist eine bewusst eingerichtete Lagerbewegung des Gehäusebauteils über eine maßgebliche Strecke relativ zum Grundbauteil zu verstehen. Maßgeblich bedeutet zum Beispiel, dass das Gehäusebauteil der Ausstoßvorrichtung über eine Strecke gegenüber dem Grundbauteil versetzbar ist, welche im Bereich der halben Länge des Gehäusebauteils liegt, wobei die Länge des Gehäusebauteils in Bewegungsrichtung des Gehäusebauteils relativ zum Grundbauteil betrachtet wird.

Die Versetzung des Gehäusebauteils der Ausstoßvorrichtung hat insbesondere nichts mit einer gegebenenfalls geringfügigen Bewegung aufgrund z. B. eines minimal vorhandenen Lagerspiels der Ausstoßvorrichtung zu tun oder hat auch nichts mit einer Bewegung aufgrund einer jedem Bauteil innewohnenden Flexibilität unter Belastung zu tun. Entsprechendes gilt auch im Zusammenhang mit der weiter unten diskutierten Versetzbarkeit eines Basisbauteils der Einzugvorrichtung.

Vorteilhafterweise lässt es sich erfindungsgemäß insbesondere einrichten, dass bei einer Schließbewegung des Möbelteils keine Rückstell- bzw. Ladekräfte für das Aufladen des Ausstoßaber auch des Einzugkraftspeichers aufgebracht werden müssen, da diese bereits im geladenen Zustand vorhanden sind. Dies wird von einem Nutzer als angenehm empfunden, da er das Möbelteil nicht entsprechend stark in Schließrichtung drücken muss. Beim Aufziehen oder Herausbewegen des Möbelteils nach dem Ende des Ausstoßvorgangs über die Ausstoßvorrichtung empfindet ein Nutzer dies nicht kritisch, da er ohnehin einen Krafteinsatz zum Weiteröffnen des Möbelteils erwartet. Gegebenenfalls ist am Ende des Ausstoßvorgangs noch eine geringe Bewegungsenergie des sich verlangsamenden Möbelteils vorhanden, so dass das manuelle Weiterbewegen erleichtert stattfinden kann, da zumindest keine Haftreibung überwunden werden muss.

Der Ausstoßvorgang mit der Ausstoßvorrichtung ist so abgestimmt, dass ein Herausbewegen des Möbelteils aus der geschlossenen Schließlage nur um zum Beispiel wenige Zentimeter erfolgt, wohingegen für eine Nutzung des Möbelteils dieses ein vielfaches davon manuell weitergeöffnet werden muss, zum Beispiel über ca. 60 Zentimeter. Bezogen auf die gesamte von dem Nutzer aufzubringende Kraft zum Weiteröffnen des Möbelteils, lässt sich der Kraftanteil, welcher für das Aufladen des Ausstoß- und/oder des Einzugkraftspeichers aufzubringen ist, mit der erfindungsgemäßen Anordnung bzw. deren Lademechanismus außerdem vergleichsweise gering halten, was auch weiter unten noch erläutert wird.

Ein weiterer wesentlicher Aspekt der Erfindung liegt darin, dass die Einzugvorrichtung ein vom Grundbauteil verschiedenes Basisbauteil aufweist, an welchem der Einzugkraftspeicher aufgenommen ist, wobei die Einzugvorrichtung derart versetzbar am Grundbauteil gelagert ist, dass das Aufladen des Einzugkraftspeichers mit einer Bewegung des Basisbauteils relativ zum Grundbauteil in die erste Bewegungsrichtung erfolgt.

Auch zur Einzugvorrichtung bzw. deren Basisbauteil sind grundsätzliche Aspekte in entsprechender Weise gültig, was die Versetzbarkeit des Gehäusebauteils der Ausstoßvorrichtung gegenüber dem Grundbauteil angeht. Das Aufladen des Einzugkraftspeichers erfolgt vorteilhafterweise mit einer Bewegung des Basisbauteils in die Öffnungsrichtung des Möbelteils. Denn mit einer Kopplung des Basisbauteils mit einem sich in Öffnungsrichtung bewegenden Element, wird ein einfacher und flexibel einrichtbarer Lademechanismus möglich. Zur insbesondere zeitweisen direkten oder indirekten Kopplung stehen grundsätzlich zudem unterschiedliche Elemente, die sich in Öffnungsrichtung bewegen, wie z. B. Teile der Führungseinheit, des Möbelteils oder auch der Ausstoßvorrichtung zur Verfügung. Diese Teile sollten lediglich im Nahbereich des Basisteils liegen oder entfernt davon sein und über Zwischenelemente mit dem Basisteil koppelbar sein.

Prinzipiell ist es gemäß der Erfindung offen, ob von Beginn bis zum Ende eines Aufladevorgangs des Ausstoß- und/oder des Einzugkraftspeichers das Gehäusebauteil der Ausstoßvorrichtung und/oder das Basisteil der Einzugvorrichtung dauerhaft bewegt werden oder ob es Phasen gibt, in denen das Gehäusebauteil der Ausstoßvorrichtung und/oder des Basisteils der Einzugvorrichtung sich nicht relativ zum Grundbauteil bewegen. Eine Bewegung relativ zu anderen Bauteilen ist davon außerdem losgelöst zu betrachten, das heißt, diesbezüglich sind sämtliche Kombinationen möglich. Insgesamt ist es dadurch möglich, den Lademechanismus der jeweiligen Kraftspeicher vorteilhaft einzurichten.

Vorteilhafterweise ist sämtlichen erfindungsgemäßen Varianten gemeinsam, dass der Lademechanismus so abgestimmt ist, dass das Aufladen der beiden Kraftspeicher mit der weiteren manuellen Öffnungsbewegung des Möbelteils nach dem Ausstoßvorgang gekoppelt erfolgt.

Ein weiterer grundlegender Aspekt der Erfindung ist darin zu sehen, dass der Lademechanismus derart ausgestaltet ist, dass das Aufladen der Kraftspeicher ausschließlich über genau ein Koppelelement erfolgt, mit dem eine zeitweise Kopplung zwischen der Vorrichtung und dem bewegbaren Möbelteil realisiert ist. Unter der Vorrichtung ist die Vorrichtung zur Bewegungsbeeinflussung zu verstehen. Dadurch kann die Komplexität der erfindungsgemäßen Bewegungsbeeinflussungsvorrichtung für ein Möbelteil vorteilhaft reduziert werden. Bislang sind für die Kopplung zum Aufladen der beiden Kraftspeicher jeweils zugeordnete Koppelelemente bekannt, also wenigstens zwei Koppelelemente. Das genau eine Koppelelement ist der Vorrichtung zur Bewegungsbeeinflussung zugeordnet und ist insbesondere als ein eigenes Bauteil ausgestaltet bzw. ist bevorzugt einteilig. Es muss allerdings wenigstens ein entsprechendes Gegenkoppelelement vorhanden sein, welches mit dem genau einen Koppelelement koppelbar ist bzw. von diesem wieder entkoppelbar ist. Das wenigstens eine Gegenkoppelelement kann insbesondere an einem mit dem Möbelteil verbundenen Teil der Führungseinheit zum Beispiel einer Bewegungsschiene vorhanden sein. Auch eine Anordnung des Gegenkoppelelements an dem Möbelteil selbst, ist nicht ausgeschlossen.

Vorteilhafterweise ist der Lademechanismus abgestimmt, dass ein Aufladen des Einzugkraftspeichers durch eine Bewegung eines an der Einzugvorrichtung vorhandenen Koppelelements in die erste Bewegungsrichtung bzw. Öffnungsrichtung des Möbelteils erfolgt, durch die dabei definiert eingerichtete Ankopplung des Koppelelements an der Führungseinheit bzw. deren Bewegungsschiene.

Besonders vorteilhaft ist es, wenn der Lademechanismus abgestimmt ist, dass ein Aufladen des Einzugkraftspeichers und des Ausstoßkraftspeichers gleichzeitig erfolgt. Dabei kann die Gleichzeitigkeit von einem Beginn bis zu einem Ende beider Ladevorgänge vorherrschen, das heißt beide Ladevorgänge laufen komplett zeitgleich. Alternativ ist es möglich, dass zumindest eine Ladephase existiert, in welcher die beiden Kraftspeicher parallel bzw. gleichzeitig ablaufen, und vor und/oder nach dieser Überlagerung erfolgt ein Laden genau eines Kraftspeichers, was konstruktiv vorteilhafter ist.

Weiter wird vorgeschlagen, dass der Lademechanismus derart ausgebildet ist, dass das Aufladen des Einzugkraftspeichers durch eine Überlagerung der Bewegung des Koppelteils der Einzugvorrichtung und des Basisbauteils in die erste Bewegungsrichtung erfolgt. Unter einer Überlagerung ist insbesondere eine Gleichzeitigkeit zu verstehen.

Damit lässt sich die von einem Nutzer für das Aufladen aufzubringende Kraft bzw. der entsprechende Anteil beim manuellen Weiteröffnen des Möbelteils nach dem Ausstoßvorgang, was die absoluten bzw. momentanen Kraftwerte angeht, vergleichsweise niedrig halten.

So können insbesondere auch ältere Personen, Behinderte oder Kinder problemlos das entsprechende Möbelteil bzw. das Möbel nutzen.

Dies wird dadurch möglich, dass die Krafteinwirkung auf das Möbelteil über einen größeren Bewegungsweg des Möbelteils bzw. damit, bei gleichen zugrundeliegenden Öffnungsgeschwindigkeiten, über einen längeren Zeitraum aufgebracht werden muss. Denn mit der Überlagerung verringert das Basisteil durch seine Bewegung in Öffnungsrichtung den relativ zum Basisteil zurückgelegten Weg des Koppelteils, das mit dem Einzugkraftspeicher verbunden ist. Mit der Relativbewegung des Koppelteils zum Basisteil in Öffnungsrichtung wird der Einzugkraftspeicher gelängt bzw. geladen, vorausgesetzt das Basisteil, an welchem der Einzugkraftspeicher mit seiner festen Lagerstelle angebracht ist, bewegt sich nicht bzw. langsamer als das Koppelteil. Denn das Koppelteil bildet direkt oder indirekt die variable Lagerstelle des Einzugkraftspeichers.

Besonders vorteilhaft ist es, wenn das Basisteil bei seiner Bewegung in die Öffnungsrichtung zumindest über eine Teilstrecke mit dem Gehäusebauteil der Ausstoßvorrichtung gekoppelt ist und das Gehäusebauteil, und damit die feste Lagerstelle des Ausstoßkraftspeichers, in die Öffnungsrichtung bis zum Erreichen einer Anschlagposition des Gehäusebauteils mitnimmt, wobei der Ausstoßkraftspeicher mit seiner variablen Lagerstelle fest relativ zum Grundbauteil gehalten ist. Dabei wird also auch der Ausstoßkraftspeicher gelängt und ebenfalls geladen. Dies ist insbesondere dann möglich, wenn vorteilhafterweise der Einzugkraftspeicher stärkere Kräfte als der Ausstoßkraftspeicher bereitstellt, also der Einzugkraftspeicher auch höhere Kräfte zum Laden benötigt. Die beiden Kraftspeicher werden dabei seriell gelängt bzw. aufgezogen. Dabei existieren neben Phasen des getrennten Aufziehens auch Phasen, in denen beide Kraftspeicher gleichzeitig geladen werden. Gemäß dem vorgenannten erfindungsgemäßen Lademechanismus ist für das überlagerte Laden der beiden Kraftspeicher ein absolut bzw. momentan aufzubringender Kraftanteil zum Aufladen der Kraftspeicher beim Weiteröffnen des Möbelteils zu keinem Zeitpunkt höher als die maximal aufzubringende Kraft, die beim alleinigen Aufladen des stärkeren Kraftspeichers nötig wäre. Mit der Erfindung muss vorteilhafterweise zu keiner Phase eine Ladekraft aufgebracht werden, die über der Ladekraft für das Laden des stärkeren Kraftspeichers liegt, auch nicht in den Phasen des überlagerten bzw. seriellen Ladens der beiden Kraftspeicher.

In einer vorteilhaften Variante des Erfindungsgegenstandes ist eine Arretiervorrichtung derart vorgesehen, dass in einer Ausgangsstellung der Vorrichtung die Einzugvorrichtung gegenüber dem Grundbauteil arretierbar ist. So kann ein definierter Grundzustand bzw. eine definierte Ausgangsstellung der Vorrichtung zur Bewegungsbeeinflussung sicher eingerichtet und erhalten bleiben. Der Grundzustand bzw. die definierte Ausgangsstellung stellt sich im Regelbetrieb ein, wenn sich das Möbelteil im Betrieb in einer funktionsrichtigen Schließposition gegenüber dem Möbelkorpus befindet. Die Arretierung der Einzugvorrichtung ist definiert einrichtbar und wieder aufhebbar, abhängig von der Position des Möbelteils zum Möbelkorpus bzw. dem Bewegungszustand des Möbelteils. Die Arretierung der Einzugvorrichtung ist insbesondere vorteilhaft, wenn die Einzugvorrichtung der Teil der Vorrichtung zur Bewegungsbeeinflussung darstellt, welcher mit dem bewegbaren Möbelteil interagiert beim Öffnen und beim Schließen des Möbelteils.

Vorteilhafterweise ist die Arretierung des Basisbauteils in der Ausgangsstellung der Vorrichtung durch eine Versetzbewegung der Einzugvorrichtung gegenüber dem Grundbauteil in die zweite Bewegungsrichtung aufhebbar. Die Versetzbewegung der Einzugvorrichtung in Schließrichtung wird vorteilhafterweise durch eine Bewegung des Möbelteils in die Schließrichtung bereitgestellt, da im Regelbetrieb bei gegenüber dem Möbelkorpus geschlossenem Möbelteil sich die Vorrichtung zur Bewegungsbeeinflussung in der Ausgangsstellung befindet. Durch ein Eindrücken des geschlossenen Möbelteils über einen geringen Eindrückweg in Schließrichtung lässt sich gemäß zum Beispiel bekannter Touch-Latch-Anordnungen eine intuitive Bedienung des Möbelteils bzw. der entsprechenden Bewegungsbeeinflussungsvorrichtung des Möbelteils zur Aufhebung der Arretierung nutzen. Damit wird zudem ein Ausstoßvorgang initiiert, was bei Touch-Latch-Anordnungen ohnehin als nächster Schritt anschließt. Die erfindungsgemäße Anordnung kann somit vorteilhafterweise mit einer an sich bekannten Touch-Latch-Funktionalität versehen werden, insbesondere durch Integration einer Touch-Latch-Anordnung in der erfindungsgemäßen Vorrichtung, insbesondere als Ausstoßvorrichtung mit Arretierung. Die wie oben geschilderte aufhebbare Arretierung kann beispielsweise mit einer Kurvenführung und einem kraftbeaufschlagten schwenkbar versetzbaren Haltelement realisiert werden, welches mit der Kurvenführung zusammenwirkt, um die Arretierung einzurichten und aufzuheben.

Für die Mitnahme der Einzugvorrichtung in Schließrichtung, wenn das Möbelteil einwärts bewegt wird, wenn zum Beispiel ein Nutzer auf eine Front des Möbelteils drückt, kann ein Anschlagmechanismus zwischen einem mit dem Möbelteil verbundenen Teil der Führungseinheit und der Einzugvorrichtung vorgesehen werden. Für das Aufheben der Arretierung ist in der Regel ein geringer Auslöseweg im Millimeterbereich ausreichend, so dass auch das Möbelteil lediglich in dieser Größenordnung vom Nutzer in die Schließrichtung bewegt werden muss. Damit die Arretierung aufrecht erhalten bleibt, wirkt auf den Arretiermechanismus eine Arretierkraft, welche bevorzugt vom geladenen Ausstoßkraftspeicher bereitgestellt wird, wobei für die Einwärtsbewegung der Einzugvorrichtung diese Arretierkraft kurzzeitig überwunden werden muss.

In einer vorteilhaften Modifikation der Erfindung sind die Ausstoßvorrichtung und die Einzugvorrichtung derart abgestimmt, dass nach einer Aufhebung der Arretierung des Basisbauteils das Basisbauteil unter der Wirkung des Ausstoßkraftspeichers in die erste Bewegungsrichtung relativ zum Grundbauteil bewegbar ist. Dies macht deutlich, dass im arretierten Zustand bzw. der Ausgangsstellung der Vorrichtung der Ausstoßkraftspeicher geladen ist und insbesondere bereitsteht, das Basisbauteil in die erste Bewegungsrichtung auszustoßen, sobald die Arretierung aufgehoben ist. Das Ausstoßen kann nur dann erfolgen, wenn keine größere Gegenkraft entgegen der ersten Bewegugnsrichtung auf das Basisteil bzw. auf das Möbelteil wirkt. Dies ist gegeben, da die vorhergehende Aufhebung der Arretierung durch die Touch-Latch-Funktionalität nur durch ein kurzzeitiges Eindrücken des Möbelteils erfolgt. Mit dem Bewegen des Basisteils in die Öffnungsrichtung wird durch dessen Kopplung mit dem bewegbaren Möbelteil dieses über einen Ausstoßweg aufgefahren. Dies ermöglicht es, dass das genau eine Koppelelement, über welches das Laden der Kraftspeicher erfolgt, auch die Koppelfunktion zwischen der Vorrichtung zur Bewegungsbeeinflussung bzw. dem Basisteil und dem bewegbaren Möbelteil während des Ausstoßvorgangs übernimmt. Dies ist im Hinblick auf eine kompakte Ausbildung und eine verringerte Komplexität der erfindungsgemäßen Vorrichtung vorteilhaft, insbesondere müssen keine gesonderten Koppelanordnungen für den Ausstoßvorgang des Möbelteils einerseits und den Ladevorgang der Kraftspeicher andererseits eingerichtet werden.

Es ist auch von Vorteil, dass die Ausstoßvorrichtung und die Einzugvorrichtung derart abgestimmt sind, dass eine Bewegung des Basisbauteils unter der Wirkung des Ausstoßkraftspeichers in die erste Bewegungsrichtung relativ zum Grundbauteil unter Beibehaltung des Ladezustands des Einzugkraftspeichers erfolgt. Vorteilhafterweise bleibt der Einzugkraftspeicher entladen, wie er es vorteilhaft in der Ausgangsstellung der Vorrichtung ist. So steht die gesamte vom Ausstoßkraftspeicher bereitstellbare Kraft auch wirklich für den Ausstoßvorgang zur Verfügung. Dies ist insbesondere bei stark beladenen bzw. großen und vergleichsweise schweren auszustoßenden Möbelteilen bedeutend, was Grenzauslegungen des Ausstoßkraftspeichers betrifft und gerade dann kein Abzug eines Teils der Kraftwirkung des Ausstoßkraftspeichers erfolgen darf, um eine gewünschte Ausstoßwirkung erzielen zu können. Es ist insbesondere vorteilhaft, dass die vom Ausstoßkraftspeicher maximal aufbringbare Kraft nicht zu einem Teil für das Aufladen des entladenen Einzugkraftspeichers herangezogen wird.

Dieses Prinzip ist auch beim Aufladen des anderen Kraftspeichers bzw. des Ausstoßkraftspeichers, verwirklicht, wonach für das Aufladen des Ausstoßkraftspeichers vorteilhafterweise kein Kraftanteil des Einzugkraftspeichers verwendet, wird. So wird auch beim automatischen Einziehen des Möbelteils die zur Verfügung stehende Kraft des Einzugkraftspeichers allein zum Einziehen des Möbelteils verwendet.

Das Aufladen der beiden Kraftspeicher erfolgt bevorzugt erst nach dem Ausstoßvorgang bzw. auf dem Weg des Möbelteils in eine Stellung, in welcher das Möbelteil weiter geöffnet ist, als am Ende des Ausstoßvorgangs. Die zum Aufladen der Kraftspeicher nötige Kraft wird nicht und nicht einmal anteilig durch den jeweils anderen Kraftspeicher bereitgestellt, sondern komplett durch den Nutzer, und zwar bevorzugt im Zusammenspiel mit einer ohnehin vom Nutzer bewusst ausgelösten bzw. aktiv bewirkten Bewegung des Möbelteils in Öffnungsrichtung.

Weiter ist es vorteilhaft, dass der Ausstoßkraftspeicher mit einem bewegbaren Greifabschnitt verbunden ist, welcher mit einem Gegenabschnitt am Basisbauteil in Anlage bringbar ist, so dass eine Kopplung zwischen dem Ausstoßkraftspeicher und dem Basisbauteil erfolgt. Vorteilhafterweise ist der Greifabschnitt an der oder im Bereich der variablen Lagerstelle des Ausstoßkraftspeichers vorhanden. So kann nach der Aufhebung der Arretierung des Basisbauteils die Ausstoßkraft besonders effektiv auf das Basisteil wirken. Die Anlage und das Zusammenwirken zwischen dem Greifabschnitt und dem Basisteil kann bevorzugt über einen fest vorhandenen mechanischen Anschlag am Basisteil realisiert werden. Darüber hinaus kann der Greifabschnitt auch dafür genutzt werden, den Ausstoßkraftspeicher mit wenigstens einem anderen Gegenabschnitten in Anlage bringen zu können, wobei der wenigstens eine andere Gegenabschnitt nicht am Basisteil vorhanden ist, sondern zum Beispiel am Grundbauteil.

Auch vorteilhaft ist es, dass das Gehäusebauteil relativ zum Grundbauteil über Anschläge am Grundbauteil begrenzt bewegbar ist. Die Ausbildung von Anschlägen ist eine wenig aufwändige Maßnahme, um zuverlässig eine Relativbewegung zwischen dem Gehäusebauteil der Ausstoßvorrichtung und dem Grundbauteil definiert vorzugeben bzw. Freiläufe und mechanische Anschläge vorzugeben. Insbesondere ist dies vorteilhaft, wenn die betreffenden Bauteile aus einem Flach- bzw. Profilelement aus einem metallischen Material oder Kunststoffmaterial bestehen. Grundsätzlich ist es auch möglich, Anschläge an anderen Bauteilabschnitten der erfindungsgemäßen Vorrichtung zur Bewegungsbeeinflussung vorzusehen, z. B. ggf. nicht für das Gehäusebauteil sondern für andere Teile, beispielsweise um Stillstandspositionen vorzugeben oder auch deren Bewegungspositionen, was den Fall betrifft, wenn der Anschlag sich selbst bewegt. Ein Anschlag kann an einem feststehenden Bauteil bzw. dem Grundbauteil oder an einem zum Grundbauteil versetzbaren bzw. daran beweglich gelagerten Bauteil, wie beispielsweise dem Gehäusebauteil, dem Basisteil oder den variablen Lagerstellen der Kraftspeicher vorhanden sein.

Auch vorteilhaft ist es, dass die Ausstoßvorrichtung und die Einzugvorrichtung derart ausgebildet sind, dass bei einer Bewegung der Einzugvorrichtung in die zweite Bewegungsrichtung eine Bewegungskupplung mit der Ausstoßvorrichtung erfolgt, wobei die Einzugvorrichtung und die Ausstoßvorrichtung gegenüber dem Grundbauteil in eine Anschlagposition gelangen.

Die betrifft insbesondere einen Betriebszustand, in welchem das Möbelteil aus einer geöffneten Stellung wieder zum Korpus hin bewegt also geschlossen wird, wobei über das Koppelelement die Einzugvorrichtung in Schließrichtung bzw. die zweite Bewegungsrichtung mitgenommen wird. Das Zusammenwirken der Einzugvorrichtung mit dem Möbelteil, bzw. einem dem Möbelteil zugeordneten Teil der Führungseinheit wie z. B. eine Bewegungsschiene einer Schubladen-Schienenführung, über das Koppelelement, führt dazu, dass die komplette Einzugvorrichtung mit dem geladenen Einzugkraftspeicher bewegt wird, ohne dass eine Auslösung bzw. Aktivierung des Einzugkraftspeichers stattfindet. Dabei wird die Ausstoßvorrichtung ebenfalls mitgenommen, ohne dass der ebenfalls geladene Ausstoßkraftspeicher ausgelöst bzw. aktiviert wird. Es erfolgt lediglich das Bewegung der Einzug- und der Ausstoßvorrichtung in die Anschlag-Positionen am Grundbauteil gemäß der Ausgangsstellung der Vorrichtung zur Bewegungsbeeinflussung. Mit Erreichen der Anschlagposition wird auch erreicht, dass nachdem die Einzugvorrichtung selbsttätig gegenüber dem Grundbauteil arretiert wird, was über die Arretiervorrichtung geschieht, in der arretierten Stellung die Einzugvorrichtung die Ausgangsstellung exakt einnimmt. Die Anschlagposition der Einzugvorrichtung am Grundbauteil unterscheidet sich in der Regel geringfügig zum Beispiel um wenige Millimeter von der danach sich einstellenden Ausgangsstellung, die um diesen Betrag in Öffnungsrichtung beabstandet zur Anschlagstellung ist. Dieser Abstand entspricht insbesondere einem zur Verfügung gestellten Eindrückweg, wenn das Möbel gemäß der Touch-Latch-Funktionalität im geschlossenen Zustand von einem Nutzer eingedrückt wird, in Erwartung des sich anschließend ausgestoßen herausbewegenden Möbelteils.

Die Erfindung betrifft außerdem eine Führungseinheit zur Bewegungsführung eines Möbelteils, das an einem Möbelkorpus eines Möbels über die Führungseinheit bewegbar aufnehmbar ist, wobei die Führungseinheit eine Vorrichtung zur Bewegungsbeeinflussung nach einer der oben genannten Varianten aufweist. Damit lassen sich an einer Führungseinheit die entsprechenden Vorteile realisieren. Als Führungseinheit kommt zum Beispiel für Schubladen und dergleichen eine Schienenführung mit teleskopierbaren Schienen zum Beispiel ein Teilauszug oder ein Vollauszug mit Korpus-, Mittel- und Bewegungsschiene in Frage.

Außerdem betrifft die Erfindung ein Möbel mit einem Möbelteil, das an einem Möbelkorpus des Möbels bewegbar aufgenommen ist, wobei eine der oben genannten Führungseinheiten vorhanden ist. Bei Möbeln mit einem Schubmöbelteil wie z. B. Schubladen werden in der Regel pro Schubmöbelteil zwei Führungseinheiten verwendet, wobei eine oder beide Führungseinheit(en) mit einer Vorrichtung zur Bewegungsbeeinflussung versehen sein können.

### Figurenbeschreibung

Weitere Vorteile und Merkmale der Erfindung werden anhand eines in den Figuren schematisch dargestellten erfindungsgemäßen Ausführungsbeispiels einer Führungseinheit bzw. einer Vorrichtung zur Bewegungsbeeinflussung eines Möbelteils aufgezeigt.

Im Einzelnen zeigt:
- Figur 1:: Eine erfindungsgemäße Führungseinheit mit einer erfindungsgemäßen Vorrichtung zur Bewegungsbeeinflussung eines Möbelteils,
- Figur 2:: eine Explosionsdarstellung der erfindungsgemäßen Vorrichtung zur Bewegungsbeeinflussung eines Möbelteils gemäß Figur 1,
- Figuren 3 bis 7:: die erfindungsgemäße Vorrichtung zur Bewegungsbeeinflussung eines Möbelteils gemäß Figur 2 im funktionsrichtigen Zusammenwirken der Teile in Draufsicht, wobei teilweise nicht sichtbare Bauteilabschnitte gestrichelt dargestellt sind und
- Figuren 8 bis 10:: eine Darstellung unterschiedlicher Phasen eines weiteren Betriebszustandes der erfindungsgemäßen Vorrichtung, wobei Figur 10 eine Detaildarstellung betrifft.

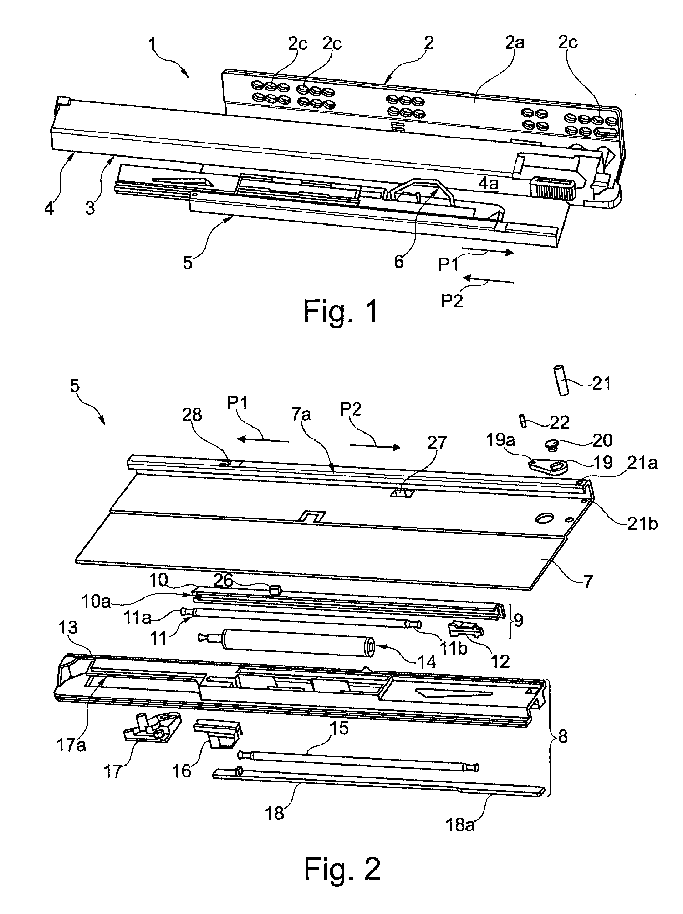

Figur 1 zeigt eine erfindungsgemäße Führungseinheit 1, welche hier beispielsweise als Vollauszug für die Führung einer Schublade oder dergleichen gegenüber einem Möbelkorpus ausgebildet ist, wobei in der Regel zwei Führungseinheiten pro Möbelteil Verwendung finden. Die Führungseinheit 1 umfasst eine einem Möbelkorpus zuordenbare Korpusschiene 2, eine einem bewegbaren Möbelteil zuordenbare Bewegungsschiene 4 und eine zwischen der Korpusschiene 2 und der Bewegungsschiene 4 verschieblich wirkende Mittelschiene 3. Über einen im montierten Betriebszustand der Führungseinheit 1 vertikal ausgerichteten Anbringabschnitt 2a mit Durchgangsöffnungen 2c und weiteren gleichartigen Öffnungen, kann die Führungseinheit 1 über nicht dargestellte Befestigungsmittel zum Beispiel an einer Innenseite einer vertikalen ersten Seitenwand des Möbelkorpus horizontal ausgerichtet befestigt werden. An der Bewegungsschiene 4 kann eine Unterseite eines Möbelteilbodens verbunden aufsitzen und über diese bewegbar am Möbelkorpus gelagert sein. Eine zur Führungseinheit 1 gleichartige bzw. zu dieser gespiegelte zweite Führungseinheit an einer zur ersten Seitenwand gegenüberliegenden Seitenwand des Möbelkorpus ist für eine zusätzliche bzw. beidseitige Lagerung des Möbelteils auf gleicher vertikaler Höhe am Möbelkorpus entsprechende vorhanden, womit das Möbelteil über die beiden Führungseinheiten gemäß des Pfeils P1 in eine erste Bewegungsrichtung bzw. in Öffnungsrichtung und gemäß des Pfeils P2 in eine zweite Bewegungsrichtung bzw. in Schließrichtung verschiebbar am Möbelkorpus lagerbar ist.

Dieser Richtungssinn ist auch im Zusammenhang mit der Beschreibung der weiter unten diskutierten Vorrichtung zur Bewegungsbeeinflussung zugrundegelegt.

Die Mittelschiene 3 ist in Figur 1 nicht ersichtlich, da sie von Abschnitten der Bewegungsschiene 4 überdeckt ist. An der Führungseinheit 1 ist eine erfindungsgemäße Vorrichtung zur Bewegungsbeeinflussung eines Möbelteils vorhanden, welche nachfolgend als Bewegungsvorrichtung 5 benannt ist. Die Bewegungsvorrichtung 5 ist hier fest mit der Korpusschiene 2 verbunden. Die Bewegungsvorrichtung 5 erstreckt sich unterhalb der Mittel- und Bewegungsschiene 4 bis über eine vertikale Seite 4a der Bewegungsschiene 4 hinaus, so dass grundlegende Teile der Bewegungsvorrichtung 5 horizontal benachbart zur Seite 4a vorhanden sind, um mit der Bewegungsvorrichtung 5 platzsparend zusammenwirken zu können.

Fest verbunden mit der Seite 4a ist ein zweiarmiger stiftartiger Bügel 6 vorhanden, der für ein gezielt abgestimmtes Zusammenwirken mit Abschnitten der Bewegungsvorrichtung 5 im Hinblick auf eine Verschiebebewegung der Bewegungsschiene 4 an der Bewegungsschiene 4 positioniert und auf die Bewegungsvorrichtung 5 abgestimmt bzw. räumlich gebogen ausgebildet ist, mit nach unten vorstehenden Funktionsabschnitten bzw. Enden, die in Bewegungsrichtung der Führungseinheit 1 versetzt zueinander sind.

In Figur 1 ist die Führungseinheit 1 im vollständig zusammengeschobenen Zustand und in einer Ausgangsstellung der Bewegungsvorrichtung 5 gezeigt, was im Regelbetrieb der Bewegungsvorrichtung 5 mit einer Schließstellung eines mit der montierten Führungseinheit 1 geführten Möbelteils korrespondiert.

In Figur 2 ist die erfindungsgemäße Bewegungsvorrichtung 5 in Explosionsdarstellung dargestellt, allerdings in einer um eine zur Bildebene vertikale Achse um 180 Winkelgrade gedrehten Ausrichtung.

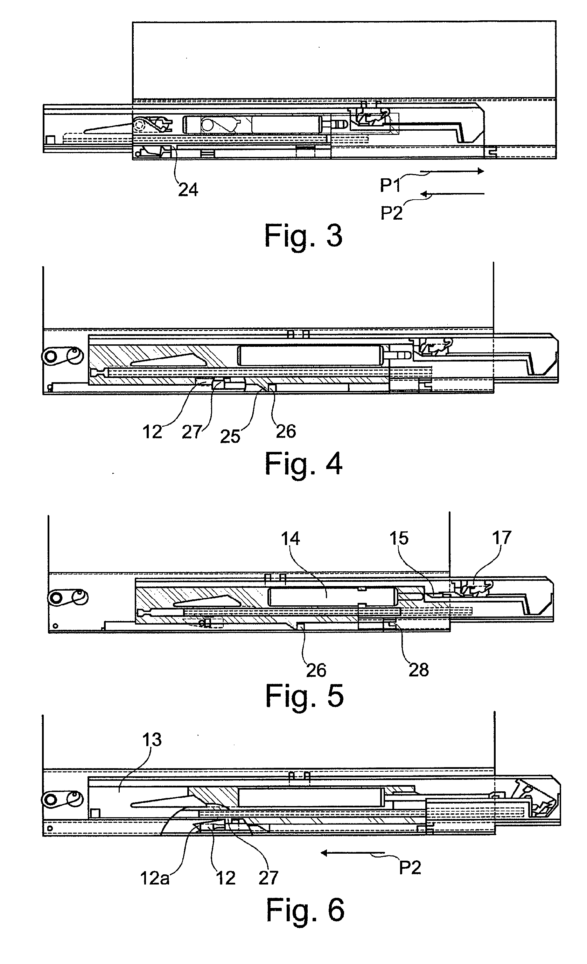

Die weiteren Figuren 3 bis 10 zeigen die Bewegungsvorrichtung 5 in der Ausrichtung gemäß der Ansicht aus Figur 1 und in Betriebszuständen, entsprechend einem montierten Zustand der Führungseinheit 1 an einem Möbel.

Die Bewegungsvorrichtung 5, die zum Beispiel an der Führungseinheit lösbar oder fest angebracht sein kann, umfasst ein als Montageplatte 7 ausgebildetes Grundbauteil, an welcher eine als Einziehautomatik 8 ausgebildete Einzugvorrichtung und eine Ausstoßvorrichtung 9 aufgenommen sind. Die Ausstoßvorrichtung 9 umfasst die Bauteile 10, 11 und 12 und ist mit einer sogenannten Touch-Latch-Funktionalität versehen.

Die Ausstoßvorrichtung 9 weist ein im Querschnitt in etwa U-förmig ausgebildetes Touch-Latch-Gehäuse 10 mit zwei freien Schenkeln auf, zwischen denen ein Ausstoßkraftspeicher aufgenommen ist, der durch eine Spiralfeder 11 realisiert ist. Ein verdickt knopfartig ausgestaltetes Ende 11a der Spiralfeder 11 ist an einer Lagerstelle 10a an einem Ende des Touch-Latch-Gehäuses 10 fest aufgenommen, wobei das andere Ende 11b, das eine variable Lagerstelle der Spiralfeder 11 bildet, mit einem Haken 12 zusammenwirkt, der beweglich entlang des Touch-Latch-Gehäuses 10 verstellbar ist.

Die Einziehautomatik 8 umfasst als Basisteil ein Einziehautomatikgehäuse 13, an dem ein als Kolben-ZylinderEinheit ausgebildeter Dämpfer 14 eingesetzt ist, einen als Spiralfeder 15 ausgestalteten Einzugkraftspeicher, an dessen variablen Lagerstelle ein Einziehautomatikmitnehmer 16 angesetzt ist, einen am Einziehautomatikmitnehmer 16 gelenkig aufgenommenen Einziehautomatikhaken 17 und ein verschiebbar zum Einziehautomatikgehäuse 13 vorhandenes Steuerelement 18 für einen weiter unten beschriebenen Betriebszustand mit einer Fehlauslösesituation im Betrieb der Führungseinheit 1. Nicht ersichtlich in Figur 2 ist eine Steuer- oder Herzkurve 23 der Touch-Latch-Funktionalität, wobei die Herzkurve 23 an der zur in Figur 2 ersichtlichen Seite des Einziehautomatikgehäuses 13 gegenüberliegenden Gegenseite ausgebildet ist.

Die beiden Kraftspeicher 11 und 15 sind auch als Energiespeicher anzusehen.

Zur Arretierung der Position des Einziehautomatikgehäuses 13 gegenüber der Montageplatte 7 wirkt ein Hebel 19 bzw. ein daran an einer Befestigungsstelle 19a eingesteckter Herzkurvenbolzen 22 mit der Herzkurve 23 zusammen. Der Hebel 19 ist an der Montageplatte 7 über einen Befestigungsbolzen 20 verschwenkbar. Außerdem ist ein Anschlagbolzen 21 über Öffnungen 21a und 21b an der Montageplatte 7 senkrecht ausgerichtet fixiert. Der Anschlagbolzen 21 ist in einem durch drei jeweils rechtwinklige Umbiegungen des Blechmaterials der Montageplatte 7 gebildeten Kanalabschnitt 7a, der entlang einer Längsseite der Montageplatte 7 ausgestaltet ist, vorhanden. Der Kanalabschnitt 7a dient zur lateral begrenzten Längsführung des darin in die Richtungen P1 und P2 verschieblichen Touch-Latch-Gehäuses 10.

Die Funktion der Führungseinheit 1 mit der Bewegungsvorrichtung 5 wird nachfolgend anhand der Figuren 3 bis Figur 7, die nacheinender auftretende Betriebszustände im Regelbetrieb zeigen, erläutert, wobei die Führungseinheit 1 nicht dargestellt ist.

Figur 3 zeigt den Zustand zu Beginn bzw. am Ende eines mit Figur 3 beginnenden kompletten Öffnungs- und Schließzyklus, eine Ausgangsstellung der erfindungsgemäßen Führungseinheit 1 bzw. der Bewegungsvorrichtung 5, also z. B. in einer Situation bei vollständig geschlossener bewegbarer Möbelschublade in einem Möbelkorpus. In Figur 3 ist zur Verdeutlichung nochmals die Öffnungsrichtung P1 und die Schließrichtung P2 angedeutet.

In der Ausgangsstellung gemäß Figur 3 befindet sich bei geschlossener Schublade die Bewegungsvorrichtung 5 bzw. das Einziehautomatikgehäuse 13 der Einziehautomatik 8 in einem gegenüber der Montageplatte 7 arretierten Zustand, was über die Touch-Latch-Funktionalität erfolgt, mit dem an der Herzkurve gefangen gehaltenem Hebel 19 bzw. Herzkurvenbolzen 22.

Durch die Kopplung der Bewegungsschiene 4 über den Bügel 6 (nur in Figur 1 ersichtlich) mit der Einziehautomatik 8 ist die Führungseinheit 1 ebenfalls arretiert und damit auch das Möbelteil bzw. die Schublade gegenüber dem Möbelkorpus.

Ein Öffnen der Schublade ist in diesem Zustand nicht ohne weiteres möglich.

Für eine Auslöseaktion wird die Bewegungsschiene 4 und damit die komplette Einziehautomatik 8 und deren Einziehautomatikgehäuse 13 um wenige Millimeter in Richtung P2 bewegt. Die Auslöseaktion führt ein Nutzer aus, indem er z. B. auf eine Schubladenfrontseite gemäß Pfeil P2 drückt.

Der Hebel 19 wird dadurch entlang der Herzkurve 23 so ausgelenkt, dass der bis dahin in einem konkaven Herzkurvenabschnitt andrückend arretierte Herzkurvenbolzen 22 aus der Arretierung frei kommt und unter der Wirkung des geladenen Ausstoßkraftspeichers bzw. der Spiralfeder 11 das Einziehautomatikgehäuse 13 in Öffnungsrichtung P1 bewegt und das Möbelteil ausgestoßen wird, was die schwimmende Lagerung des Einziehautomatikgehäuse 13 gegenüber der Montageplatte 7 ermöglicht. Mit dem Ausstoßvorgang kürzt sich die Spiralfeder 11 und entlädt sich dabei zumindest teilweise. Das Ausstoßen erfolgt durch ein Einhaken des Hakens 12 an einem seitlich überstehenden Vorsprung 24 am Einziehautomatikgehäuse 13. Dabei wird das Touch-Latch-Gehäuse 10 nach hinten bzw. in Richtung P2 gedrückt. In dieser Phase ist die Spiralfeder 15 nicht geladen bzw. nicht gespannt.

Die Ausstoßbewegung erfolgt so weit, bis gemäß Figur 4 der Haken 12 an einem nach oben umgebogenen Anschlagwinkel 27 ansteht und somit die Bewegungsschiene 4 bzw. das Möbelteil stoppt. Der Ausstoßvorgang ist beendet. In dieser Stellung steht außerdem ein nasenartiger Vorsprung 25, der außen am Einziehautomatikgehäuse 13 seitlich vorsteht, an einem auf den Vorsprung 25 abgestimmten mechanischen Anschlagelement 26 am Touch-Latch-Gehäuse 10 an.

Nun folgt der Übergang zum Rückstellen bzw. Laden der Kraftspeicher 11, 15. Da das Möbelteil nun steht, öffnet anschließend eine Bedienperson das Möbelteil manuell weiter durch Ziehen in Öffnungsrichtung P1. Dabei wird durch die Bewegung der Bewegungsschiene 4 der Einziehautomatikhaken 17 samt Einziehautomatikmitnehmer 16 ebenfalls in Richtung P1 verschoben und damit die Spiralfeder 15 gelängt und so geladen (Figur 5). Außerdem wird eine aus einem Zylindergehäuse des Dämpfers 14 heraustretende Kolbenstange, die am Einziehautomatikmitnehmer 16 angreift, in Richtung P1 verschoben und der Dämpfer 14 in einen dämpfungsfähigen Zustand gebracht. Gleichzeitig bzw. überlagernd, da der Vorsprung 25 das Anschlagelement 26 mitnimmt, wird auch das Einziehautomatikgehäuse 13 in Richtung P1 verschoben und dabei die Spiralfeder 11 gelängt und geladen. Denn der Haken 12 mit dem einen Ende 11b der Spiralfeder 11 steht positionsfest am Anschlagwinkel 27 an. Da die Federkraft der Spiralfeder 15 größer ist als die Federkraft der Spiralfeder 11, legt die Spiralfeder 15 weniger Weg zurück als die Spiralfeder 11. Demnach wird zuerst die Aufladung der Spiralfeder 11 komplett beendet, bevor die Spiralfeder 15 vollständig geladen wird.

Der Bewegungsweg des Touch-Latch-Gehäuses 10 entlang dem Kanalabschnitt in Richtung P1 ist durch einen weiteren Anschlag 28 an der Montageplatte 7 definiert begrenzt, indem das Anschlagelement 26 oben am Touch-Latch-Gehäuses 10 an dem Anschlag 28 anstößt.

Am Ende des Ladevorgangs der Spiralfeder 11 wird der Haken 12 etwas aus dem Touch-Latch-Gehäuse 10 herausgezogen, so dass der Haken 12 stirnseitig am Touch-Latch-Gehäuse 10 einrasten kann und so gegen ein Entladen gesichert ist.

Der Einziehautomatikhaken 17, der entlang einer L-förmigen Führungsbahn 17a am Einziehautomatikgehäuse 13 geführt ist, verrastet im kürzeren abgewinkelten Abschnitt der Führungsbahn 17a durch Verschwenken und erreicht dort seine Freigabeposition bezogen auf die Bewegungsschiene 4. Dabei gelangt der Bügel 6 an der Bewegungsschiene außer Eingriff vom Einziehautomatikhaken 17, so dass die Schublade anschließend frei bzw. entkoppelt von der Bewegungsvorrichtung 5 in Öffnungsrichtung P1 bewegt werden kann.

Mit einer Schließbewegung der Schublade erreicht der Bügel 6 an der Bewegungsschiene 4 den Fangbereich des Einziehautomatikhakens 17 und nimmt diesen in Richtung P2 mit und damit die gesamte Einziehautomatik 8 mit der gespannten Spiralfeder 15 (Figur 6). Der Einziehautomatikhaken 17 wird dabei noch nicht ausgelöst bzw. er bleibt in der verrasteten Stellung in der Führungsbahn 17a.

Gemäß Figur 6 trifft der Anschlagwinkel 27 auf den Haken 12, womit die gespannte Ausstoßvorrichtung 9 ebenfalls in Richtung P2 mitbewegt wird. Beide Einheiten, Einziehautomatik 8 und Ausstoßvorrichtung 9, werden zurückgestellt.

Die Einziehautomatik 8 und die Ausstoßvorrichtung 9 erreichen die Endposition. Der Herzkurvenbolzen 22 wird an der Herzkurve 23 in die Fangstellung gebracht. Zugleich wird der Haken 12 bzw. eine schräge rückseitige Flanke 12a durch Kontakt mit dem Anschlagbolzen 21 ausgelöst, also aus seiner Arretierung am Touch-Latch-Gehäuse 10 gebracht, so dass die Spiralfeder 11 auf das Einziehautomatikgehäuse 13 eine Kraft in Richtung P1 aufbringt und wieder etwas in Richtung P1 drückt bis der Herzkurvenbolzen 22 gesteuert durch die Herzkurve 23 mit Federkraft beaufschlagt am Einziehautomatikgehäuse 13 ansteht. Die vorgespannte Spiralfeder 11 wirkt dabei weiterhin auf das arretierte Einziehautomatikgehäuse 13, da der Haken 12 am Anschlagwinkel 27 gegendrückt.

In der Endposition wird durch überschüssige Schließenergie des Möbelteils zum Beispiel beim Einfahren der Schublade oder durch Zudrücken erreicht, dass die Einziehautomatik 8 ausgelöst wird bzw. der Einziehautomatikhaken 17 aus der arretierten Stellung in der Führungsbahn 17a herausgeschwenkt wird und ein gedämpfter Selbsteinzug beginnt. Die Bewegungsschiene 4 bzw. das Möbelteil wird unter Wirkung der geladenen am Einziehautomatikhaken 17 angreifenden Spiralfeder 15 eingezogen. Die überschüssige Schließenergie wird im Dämpfer 14 vernichtet.

Es wird die komplett geschlossene Endstellung der Bewegungsschiene 4 bzw. des bewegbaren Möbelteils erreicht.

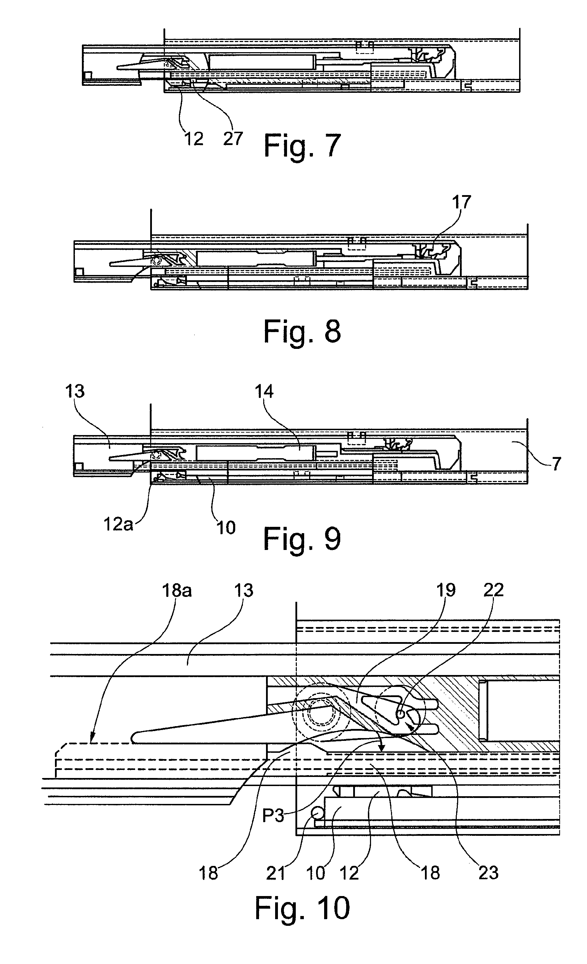

Figur 7: Die Spiralfeder 11 zieht die Einziehautomatik 8 wieder in die Ausgangsstellung bzw. Grundstellung. Die Bewegungsschiene 4 ist wieder in ihrer Ausgangsstellung.

Die Figuren 8 bis 10 zeigen unterschiedliche Phasen eines Betriebszustandes, der unregelmäßig bzw. durch eine Fehlbedienung des Möbelteils auftreten kann.

Ausgehend von der Ausgangsstellung der Bewegungsvorrichtung 5 wird die Bewegungsschiene 4 bzw. ohne vorheriges Eindrücken das daran vorhandene Möbelteil in Öffnungsrichtung P1 gezogen. Die Touch-Latch-Funktionalität wird hierbei also umgangen. Über den am Einziehautomatikhaken 17 angekoppelten Bügel 6 wird der Dämpfer 14 und die Spiralfeder 15 in Richtung P1 aufgezogen (Figur 8). Das Einziehautomatikgehäuse 13 wird jedoch durch den Herzkurvenbolzen 22 zurückgehalten.

Nach Freigabe der Bewegungsschiene gemäß Figur 9 und dem folgenden Schließvorgang des Möbelteils drückt der Dämpfer 14 das Einziehautomatikgehäuse 13 zurück. Da sich aber das Steuerelement 18 nicht in einer Freigabestellung relativ zum Einziehautomatikgehäuse 13 befindet, sondern ein verbreiteter Abschnitt 18a auf Höhe seitlich zur Herzkurve 23, kann der Herzkurvenbolzen 22 bzw. der Hebel 19 nicht seitlich wegschwenken und so auch nicht aus der Arretierung an der Herzkurve 23 freikommen.

Wenn die Grundstellung erreicht ist, befindet sich das Steuerelement 18 maximal in Richtung P2 verschoben relativ zum Einziehautomatikgehäuse 13, womit der Hebel 19 gemäß Pfeil P3 bzw. der Herzkurvenbolzen 22 aus der Herzkurve 23 frei kommen können (siehe Figur 10), wenn das Möbelteil eingedrückt wird.

### Bezugszeichenliste:

- 1: Führungseinheit
- 2: Korpusschiene
- 2a: Anbringabschnitt
- 2c: Durchgangsöffnung
- 3: Mittelschiene
- 4: Bewegungsschiene
- 4a: Seite
- 5: Bewegungsvorrichtung
- 6: Bügel
- 7: Montageplatte
- 7a: Kanalabschnitt
- 8: Einziehautomatik
- 9: Ausstoßvorrichtung
- 10: Touch-Latch-Gehäuse
- 10a: Lagerstelle
- 11: Spiralfeder
- 11a, 11b: Ende
- 12: Haken
- 12a: Flanke
- 13: Einziehautomatikgehäuse
- 14: Dämpfer
- 15: Spiralfeder
- 16: Einziehautomatikmitnehmer
- 17: Einziehautomatikhaken
- 17a: Führungsbahn
- 18: Steuerelement
- 18a: Abschnitt
- 19: Hebel
- 19a: Befestigungsstelle
- 20: Befestigungsbolzen
- 21: Anschlagbolzen
- 21a, 21b: Öffnung
- 22: Herzkurvenbolzen
- 23: Herzkurve
- 24, 25: Vorsprung
- 26: Anschlagelement
- 27: Anschlagwinkel
- 28: Anschlag

## Patentansprüche

1. Vorrichtung (5) zur Bewegungsbeeinflussung eines Möbelteils, das an einem Möbelkorpus eines Möbels über eine Führungseinheit (1) bewegbar aufgenommen ist, wobei die Vorrichtung (5) ein der Führungseinheit (1) zugeordnetes Grundbauteil (7) umfasst, an dem eine Ausstoßvorrichtung (9) und eine Einzugvorrichtung (8) derart vorhanden ist, dass im montierten Zustand der Vorrichtung (5) am Möbel das Möbelteil aus einer Schließstellung am Möbelkorpus unter der Wirkung eines Ausstoßkraftspeichers (11) der Ausstoßvorrichtung (9) in eine erste Bewegungsrichtung ausstoßbar ist und dass das Möbelteil unter der Wirkung eines Einzugkraftspeichers (15) der Einzugvorrichtung (8) aus einer am Möbelkorpus geöffneten Stellung in eine der ersten Bewegungsrichtung entgegengesetzte zweite Bewegungsrichtung einziehbar ist, und ein Lademechanismus zum Aufladen der Kraftspeicher (11, 15) vorhanden ist, **dadurch gekennzeichnet, dass** die Ausstoßvorrichtung (9) ein vom Grundbauteil (7) verschiedenes Gehäusebauteil (10) aufweist, an welchem der Ausstoßkraftspeicher (11) aufgenommen ist, wobei die Ausstoßvorrichtung (9) derart versetzbar am Grundbauteil (7) gelagert ist, dass das Aufladen des Ausstoßkraftspeichers (11) mit einer Bewegung des Gehäusebauteils (10) relativ zum Grundbauteil (7) erfolgt.

2. Vorrichtung nach dem Oberbegriff des Anspruchs 1, insbesondere nach Anspruch 1, **dadurch gekennzeichnet, dass** die Einzugvorrichtung (8) ein vom Grundbauteil (7) verschiedenes Basisbauteil (13) aufweist, an welchem der Einzugkraftspeicher (15) aufgenommen ist, wobei die Einzugvorrichtung (8) derart versetzbar am Grundbauteil (7) gelagert ist, dass das Aufladen des Einzugkraftspeichers (15) mit einer Bewegung des Basisbauteils (13) relativ zum Grundbauteil (7) in die erste Bewegungsrichtung erfolgt.

3. Vorrichtung nach dem Oberbegriff des Anspruchs 1, insbesondere nach Anspruch 1 oder 2, **dadurch gekennzeichnet, dass** der Lademechanismus derart ausgestaltet ist, dass das Aufladen der Kraftspeicher (11, 15) ausschließlich über genau ein Koppelelement (17) erfolgt, mit dem eine zeitweise Kopplung zwischen der Vorrichtung (5) und dem bewegbaren Möbelteil realisiert ist.

4. Vorrichtung nach Anspruch 1 oder Anspruch 2, **dadurch gekennzeichnet, dass** der Lademechanismus derart abgestimmt ist, dass ein Aufladen des Einzugkraftspeichers (15) und des Ausstoßkraftspeichers (11) gleichzeitig erfolgt.

5. Vorrichtung nach einem der vorhergehenden Ansprüche, **dadurch gekennzeichnet, dass** der Lademechanismus derart ausgebildet ist, dass das Aufladen des Einzugkraftspeichers (15) durch eine Überlagerung der Bewegung des Koppelteils (17) der Einzugvorrichtung (8) und des Basisbauteils (13) in die erste Bewegungsrichtung erfolgt.

6. Vorrichtung nach einem der vorhergehenden Ansprüche, **dadurch gekennzeichnet, dass** eine Arretiervorrichtung (22, 23) derart vorgesehen ist, dass in einer Ausgangsstellung der Vorrichtung (5) die Einzugvorrichtung (8) gegenüber dem Grundbauteil (7) arretierbar ist.

7. Vorrichtung nach einem der vorhergehenden Ansprüche, **dadurch gekennzeichnet, dass** die Arretierung des Basisbauteils (13) in der Ausgangsstellung der Vorrichtung (5) durch eine Versetzbewegung der Einzugvorrichtung (8) gegenüber dem Grundbauteil (7) in die zweite Bewegungsrichtung aufhebbar ist.

8. Vorrichtung nach einem der vorhergehenden Ansprüche, **dadurch gekennzeichnet, dass** die Ausstoßvorrichtung (9) und die Einzugvorrichtung (8) derart abgestimmt sind, dass nach einer Aufhebung der Arretierung des Basisbauteils (13) das Basisbauteil (13) unter der Wirkung des Ausstoßkraftspeichers (11) in die erste Bewegungsrichtung relativ zum Grundbauteil (7) bewegbar ist.

9. Vorrichtung nach einem der vorhergehenden Ansprüche, **dadurch gekennzeichnet, dass** die Ausstoßvorrichtung (9) und die Einzugvorrichtung (8) derart abgestimmt sind, dass eine Bewegung des Basisbauteils (13) unter der Wirkung des Ausstoßkraftspeichers (11) in die erste Bewegungsrichtung relativ zum Grundbauteil (7) unter Beibehaltung des Ladezustandes des Einzugkraftspeichers (15) erfolgt.

10. Vorrichtung nach einem der vorhergehenden Ansprüche, **dadurch gekennzeichnet, dass** der Ausstoßkraftspeicher (11) mit einem bewegbaren Greifabschnitt (12) verbunden ist, welcher mit einem Gegenabschnitt (24) am Basisbauteil (13) in Anlage bringbar ist, so dass eine Kopplung zwischen dem Ausstoßkraftspeicher (11) und dem Basisbauteil (13) erfolgt.

11. Vorrichtung nach einem der vorhergehenden Ansprüche, **dadurch gekennzeichnet, dass** das Gehäusebauteil (10) relativ zum Grundbauteil (7) über Anschläge (27, 28) am Grundbauteil (7) begrenzt bewegbar ist.

12. Vorrichtung nach einem der vorhergehenden Ansprüche, **dadurch gekennzeichnet, dass** die Ausstoßvorrichtung (9) und die Einzugvorrichtung (8) derart ausgebildet sind, dass bei einer Bewegung der Einzugvorrichtung (8) in die zweite Bewegungsrichtung eine Bewegungskopplung mit der Ausstoßvorrichtung (9) erfolgt, wobei die Einzugvorrichtung (8) und die Ausstoßvorrichtung (9) gegenüber dem Grundbauteil (7) in eine Anschlagposition gelangen.

13. Führungseinheit (1) zur Bewegungsführung eines Möbelteils, das an einem Möbelkorpus eines Möbels über die Führungseinheit (1) bewegbar aufnehmbar ist, wobei die Führungseinheit (1) eine Vorrichtung (5) zur Bewegungsbeeinflussung nach einem der vorhergehenden Ansprüche aufweist.

14. Möbel mit einem Möbelteil, das an einem Möbelkorpus des Möbels bewegbar aufgenommen ist, wobei eine Führungseinheit (1) nach Anspruch 13 vorhanden ist.

## Claims

1. Device (5) for influencing the movement of a furniture part which is accommodated movably on a furniture structure of an item of furniture by means of a guide unit (1), the device (5) comprising a basic component (7) which is assigned to the guide unit (1) on which basic component an ejection device (9) and a moving-in device (8) are provided, such that in the mounted state of the device (5) on the item of furniture the furniture part can be ejected from a closed position on the furniture structure in a first direction of movement under the action of an ejection force accumulator (11) of the ejection device (9), and the furniture part can be drawn in from an open position on the furniture structure in a second direction of movement opposite the first direction of movement under an action of a moving-in force accumulator (15) of the moving-in device (8), and a charging mechanism is provided for charging the force accumulators (11, 15), **characterised in that** the ejection device (9) has a housing component (10) which is different from the basic component (7), on which housing component the ejection force accumulator (11) is accommodated, wherein the ejection device (9) is mounted displaceably on the basic component (7) in such a manner that the ejection force accumulator (11) is charged by a movement of the housing component (10) relative to the basic component (7).

2. Device according to the preamble of claim 1, in particular according to claim 1, **characterised in that** the moving-in device (8) comprises a base component (13) different from the basic component (7) on which base component the moving-in force accumulator (15) is mounted, wherein the moving-in device (8) is mounted displaceably on the basic component (7) in such a manner that the moving-in force accumulator (15) is charged by a movement of the base component (13) relative to the basic component (7) in the first direction of movement.

3. Device according to the preamble of claim 1, in particular according to claim 1 or 2, **characterised in that** the charging mechanism is configured in such a manner that the accumulators (11, 15) are charged exclusively by means of precisely one coupling element (17) with which a temporary coupling can be formed between the device (5) and the movable furniture part.

4. Device according to claim 1 or claim 2, **characterised in that** the charging mechanism is coordinated in such a manner that the moving-in force accumulator (15) and the ejection force accumulator (11) are charged simultaneously.

5. Device according to any one of the preceding claims, **characterised in that** the charging mechanism is designed such that the moving-in force accumulator (15) is charged by overlayering the movement of the coupling element (17) of the moving-in device (8) and the movement of the base component (17) in the first direction of movement.

6. Device according to any one of the preceding claims, **characterised in that** a locking device (22, 23) is provided such that in a starting position of the device (5) the moving-in device (8) can be locked in relation to the basic component (7).

7. Device according to any one of the preceding claims, **characterised in that** the locking of the base component (13) in the starting position of the device (5) can be released by a displacement of the moving-in device (8) relative to the basic component (7) in the second direction of movement.

8. Device according to any one of the preceding claims, **characterised in that** the ejection device (9) and the moving-in device (8) are coordinated in such a manner that, after the locking of the base component (13) is released, the base component (13) can be moved relative to the basic component (7) in the first direction of movement under the action of the ejection force accumulator (11).

9. Device according to any one of the preceding claims, **characterised in that** the ejection device (9) and the moving-in device (8) are coordinated in such a manner that the base component (13) moves relative to the basic component (7) in the first direction of movement under the action of the ejection force accumulator (11), with the charging state of the moving-in force accumulator (15) being maintained.

10. Device according to any one of the preceding claims, **characterised in that** the ejection force accumulator (11) is connected to a movable gripping section (12) which can be brought into contact with a mating section (24) on the base component (13) such that coupling takes place between the ejection force accumulator (11) and the base component (13).

11. Device according to any one of the preceding claims, **characterised in that** the housing component (10) is movable relative to the basic component (7) in a manner limited by stops (27, 28) on the basic component (7).

12. Device according to any one of the preceding claims, **characterised in that** the ejection device (9) and the moving-in device (8) are designed in such a manner that, when the moving-in device (8) moves in the second direction of movement a movement coupling with the ejection device (9) takes place, with the moving-in device (8) and the ejection device (9) moving into a stop position in relation to the basic component (7).

13. Guide unit (1) for guiding the movement of a furniture part which can be accommodated movably on a furniture structure of an item of furniture via the guide unit (1), wherein the guide unit (1) comprises a device (5) for influencing the movement according to any one of the preceding claims.

14. Item of furniture comprising a furniture part which is accommodated movably on a furniture structure of the item of furniture, wherein a guide unit (1) is provided according to claim 13.

## Revendications

1. Dispositif (5) pour influencer le mouvement d'une partie de meuble qui est reçue mobile sur un corps de meuble d'un meuble par le biais d'une unité de guidage (1), le dispositif (5) comprenant un élément de fond (7) associé à l'unité de guidage (1) et sur lequel un dispositif de sortie (9) et un dispositif de rentrée (8) sont prévus, de telle sorte que, lorsque le dispositif (5) est monté sur le meuble, la partie de meuble peut être sortie d'une position de fermeture sur le corps de meuble dans une première direction de mouvement sous l'action d'un accumulateur de force de sortie (11) du dispositif de sortie (9) et que la partie de meuble peut être rentrée d'une position ouverte sur le corps de meuble dans une deuxième direction de mouvement opposée à la première direction de mouvement sous l'action d'un accumulateur de force de rentrée (15) du dispositif de rentrée (8), et un mécanisme de rechargement est prévu pour charger les accumulateurs de force (11, 15), **caractérisé en ce que** le dispositif de sortie (9) présente un élément de boîtier (10) différent de l'élément de fond (7) et sur lequel est reçu l'accumulateur de force de sortie (11), le dispositif de sortie (9) étant logé mobile sur l'élément de fond (7) de telle sorte que le rechargement de l'accumulateur de force de sortie (11) s'effectue avec un mouvement de l'élément de boîtier (10) par rapport à l'élément de fond (7).

2. Dispositif selon le préambule de la revendication 1, en particulier selon la revendication 1, **caractérisé en ce que** le dispositif de rentrée (8) présente un élément de base (13) différent de l'élément de fond (7) et sur lequel est reçu l'accumulateur de force de rentrée (15), le dispositif de rentrée (8) étant logé mobile sur l'élément de fond (7) de telle sorte que le rechargement de l'accumulateur de force de rentrée (15) s'effectue avec un mouvement de l'élément de base (13) par rapport à l'élément de fond (7) dans la première direction de mouvement.

3. Dispositif selon le préambule de la revendication 1, en particulier selon la revendication 1 ou 2, **caractérisé en ce que** le mécanisme de rechargement est conçu de telle manière que le rechargement des accumulateurs de force (11, 15) s'effectue exclusivement par l'intermédiaire d'un seul élément d'accouplement (17) au moyen duquel un accouplement intermittent est réalisé entre le dispositif (5) et la partie de meuble mobile.

4. Dispositif selon la revendication 1 ou la revendication 2, **caractérisé en ce que** le mécanisme de rechargement est ajusté de telle manière qu'un rechargement de l'accumulateur de force de rentrée (15) et de l'accumulateur de force de sortie (11) s'effectue simultanément.

5. Dispositif selon l'une des revendications précédentes, **caractérisé en ce que** le mécanisme de rechargement est conçu de telle manière que le rechargement de l'accumulateur de force de rentrée (15) s'effectue par l'intermédiaire d'une superposition du mouvement de la partie d'accouplement (17) du dispositif de rentrée (8) et de l'élément de base (13) dans la première direction de mouvement.

6. Dispositif selon l'une des revendications précédentes, **caractérisé en ce qu**'un dispositif de blocage (22, 23) est prévu de telle manière que, dans une position de départ du dispositif (5), le dispositif de rentrée (8) peut être bloqué par rapport à l'élément de fond (7).

7. Dispositif selon l'une des revendications précédentes, **caractérisé en ce que** le blocage de l'élément de base (13) dans la position de départ du dispositif (5) peut être levé par un déplacement du dispositif de rentrée (8) par rapport à l'élément de fond (7) dans la deuxième direction de mouvement.

8. Dispositif selon l'une des revendications précédentes, **caractérisé en ce que** le dispositif de sortie (9) et le dispositif de rentrée (8) sont ajustés l'un avec l'autre de telle manière qu'une fois le blocage de l'élément de base (13) levé, l'élément de base (13) peut être déplacé dans la première direction de mouvement par rapport à l'élément de fond (7) sous l'action de l'accumulateur de force de sortie (11).

9. Dispositif selon l'une des revendications précédentes, **caractérisé en ce que** le dispositif de sortie (9) et le dispositif de rentrée (8) sont ajustés l'un avec l'autre de telle manière qu'un mouvement de l'élément de base (13) sous l'action de l'accumulateur de force de sortie (11) s'effectue dans la première direction de mouvement par rapport à l'élément de fond (7) avec conservation de l'état de rechargement de l'accumulateur de force de rentrée (15).

10. Dispositif selon l'une des revendications précédentes, **caractérisé en ce que** le accumulateur de force de sortie (11) est relié à une section de préhension (12) mobile, laquelle peut être amenée en contact avec une section complémentaire (24) sur l'élément de base (13), de sorte qu'un accouplement s'effectue entre l'accumulateur de force de sortie (11) et l'élément de base (13).

11. Dispositif selon l'une des revendications précédentes, **caractérisé en ce que** l'élément de boîtier (10) peut être déplacé de façon limitée par rapport à l'élément de fond (7) par l'intermédiaire de butées (27, 28) situées sur l'élément de fond (7).

12. Dispositif selon l'une des revendications précédentes, **caractérisé en ce que** le dispositif de sortie (9) et le dispositif de rentrée (8) sont conçus de telle manière que lors d'un mouvement du dispositif de rentrée (8) dans la deuxième direction de mouvement, un accouplement de mouvement avec le dispositif de sortie (9) s'effectue, le dispositif de rentrée (8) et le dispositif de sortie (9) parvenant dans une position de butée par rapport à l'élément de fond (7).

13. Unité de guidage (1) pour le guidage de mouvement d'une partie de meuble qui peut être reçue mobile sur un corps de meuble d'un meuble par l'intermédiaire de l'unité de guidage (1), l'unité de guidage (1) comprenant un dispositif (5) pour influencer le mouvement selon l'une des revendications précédentes.

14. Meuble comprenant une partie de meuble qui est reçue mobile sur un corps de meuble du meuble, une unité de guidage (1) selon la revendication 13 étant présente.
